# EUROPEAN PATENT APPLICATION

(11) **EP 1 302 265 A1**
(43) Date of publication of application: **16.04.2003**
(21) Application number: 01947865.0
(22) Date of filing: 05.07.2001
(51) Int. Cl.: B23B 27/18, B23P 15/28, C04B 37/00

(54) **HARD SINTERED COMPACT THROWAWAY TIP**

(30) Priority: 19.07.2000 JP 2000218806
(71) Applicant: Sumitomo Electric Industries, Ltd., Osaka-shi, Osaka 541-0041 (JP)
(72) Inventor: KANADA, Yasuyuki, Sumitomo Electric Ind. Ltd., Itami-shi, Hyogo 664-0016 (JP); FUKAYA, Tomohiro, Sumitomo Electric Ind. Ltd., Itami-shi, Hyogo 664-0016 (JP); KUKINO, Satoru, Sumitomo Electric Ind. Ltd., Itami-shi, Hyogo 664-0016 (JP)
(74) Representative: HOFFMANN - EITLE
(86) International application number: JP0105860
(87) International publication number: WO02005991

(57) **Abstract**

An object of the invention is to provide a hard sintered body indexable insert in which a hard sintered body used as a cutting edge is brazed to all corners of a tool substrate and to seating grooves of the upper and lower surfaces thereof, and which has high performance and is low-cost. A brazing alloy a part of which contains 0.5 to 65 wt % Ti and/or Zr and the remainder of Cu and inevitable impurities is used as a typical brazing alloy, and the hard sintered body is brazed to the tool substrate by heating it in a vacuum or in an inert gas atmosphere. The thickness of the tool substrate between the upper and lower seating grooves is 30% to 90% of the entire thickness of the hard sintered body indexable insert, and the cutting-edge length of the hard sintered body is 0.5 mm to 4 mm.

## Description

### Technical Field

The present invention relates to an indexable insert in which a sintered body that contains cubic boron nitride is bonded to a tool substrate.

### Background Art

A sintered material made by sintering fine cubic boron nitride using various binders shows excellent performance when used to cut hard iron-family metals and cast iron.

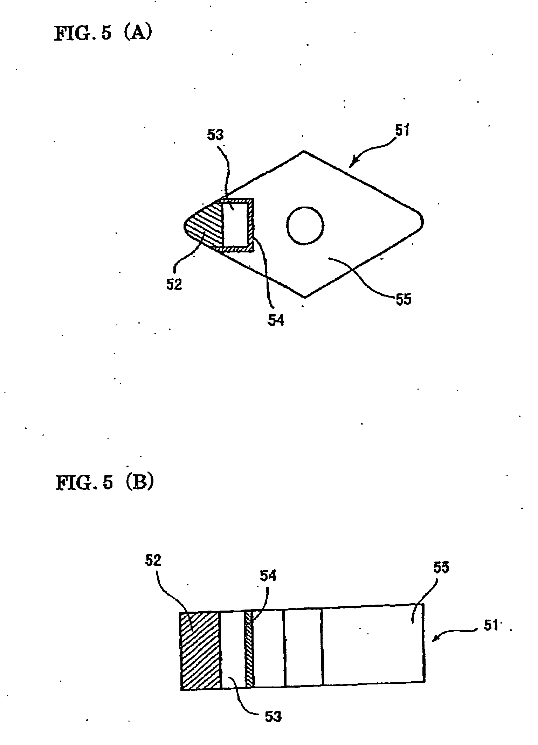

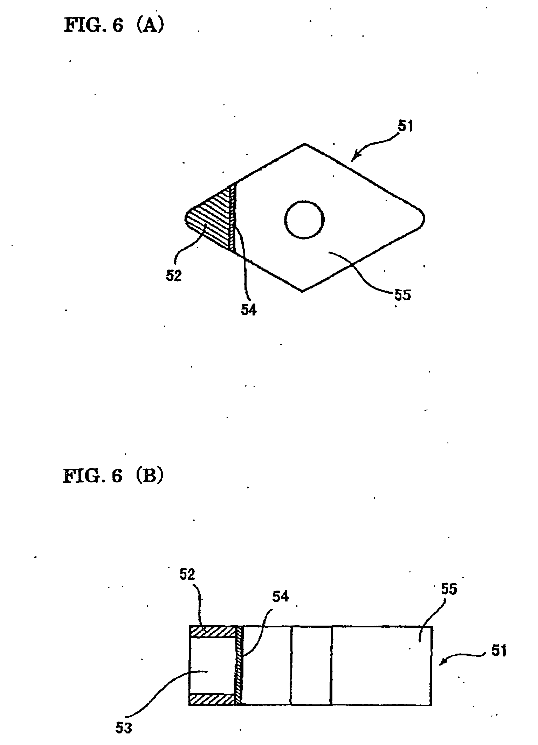

Figures 5 and 6 show examples of conventional tools disclosed in Japanese Published Unexamined Utility Model Application Jitsukaihei 3-93004. A hard sintered body indexable insert 51 shown in Fig. 5 is obtained by forming a concave hollow at a corner part of a tool substrate 55, thereafter fitting a composite hard sintered body that consists of a hard sintered body 52 and a cemented carbide support 53 thereinto, and brazing them. Cutting edges are formed at the upper and lower surfaces of the hard sintered body indexable insert 51.

Likewise, in a hard sintered body indexable insert 51 shown in Figure 6, a composite hard sintered body that consists of a hard sintered body 52 and a cemented carbide support 53 is brazed to the overall side face of a corner part of a tool substrate 55. As in the case shown in Figure 5, cutting edges are formed at the upper and lower surfaces of the hard sintered body indexable insert 51.

The plurality of cutting edges of the upper and lower surfaces of the tip can be simultaneously ground by disposing the composite hard sintered body as shown in Figures 5 and 6, through one grinding step. Machining costs for each cutting edge of the hard sintered body 52 therefore, can be reduced, and an inexpensive tool can be provided.

However, the drawback of the constructed conventional tool is that it is difficult to manufacture a less expensive indexable insert, or achieve high tool performance.

In other words, cracks and breakage will occur in the hard sintered body 52 if the tool of Figure 5 is used under severe conditions. The cracks and breakage run through the hard sintered body 52 with low strength, and reach an unused corner opposite the corner that has been used. As a result, a problem occurs in which the unused corner can no longer be used.

Further, in the tool of Figure 6, the composite hard sintered body consisting of the hard sintered body 52 and the cemented carbide support 53 is brazed only in a direction to be sheared with respect to cutting resistance (main cutting force). Therefore, there is the possibility that the composite hard sintered body comes off under severe conditions because of insufficient brazing strength.

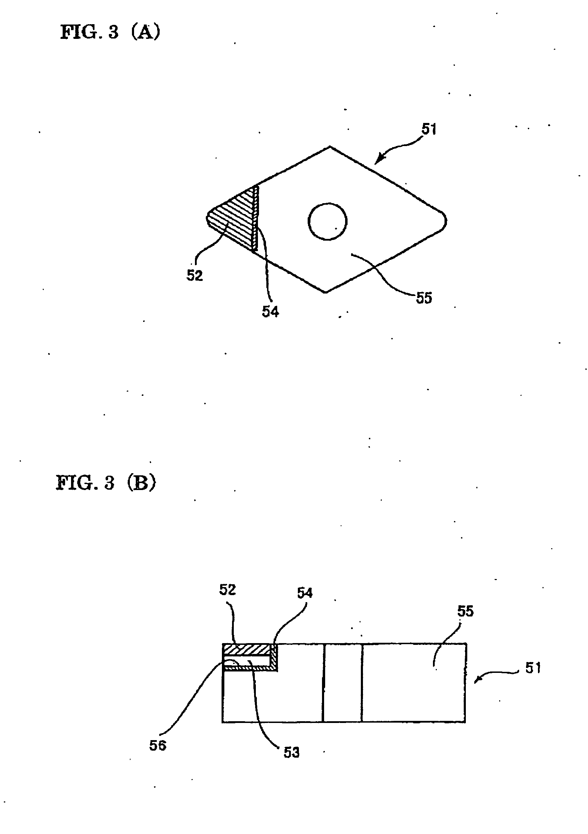

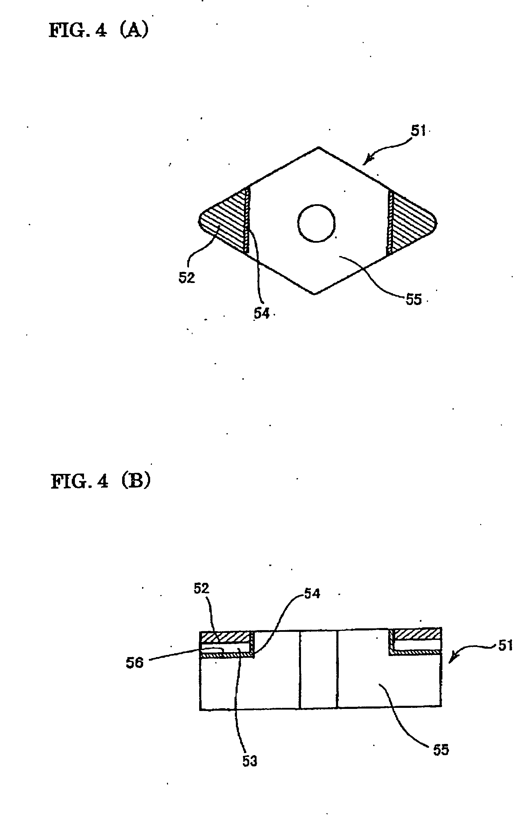

Further, other conventional examples of the hard sintered body indexable insert are shown in Figures 3 and 4. In Fig. 3, the hard sintered body 52 is sintered with the cemented carbide support 53 and obtained as a cubic boron nitride composite hard sintered body in a state of being backed with the cemented carbide support 53. This composite hard sintered body is brazed to a seating groove 56 of the tool substrate 55 through a brazing alloy composed chiefly of Ag and Cu. Thereafter, only a ridge of the hard sintered body 52, which serves as a cutting edge, is ground, or is ground simultaneously with a ridge of the tool substrate 55, and thus the hard sintered body indexable insert 51 shown in Fig. 3 is obtained.

In Figure 4, a plurality of composite hard sintered bodies are brazed to the upper surface of the tool substrate 55, and are ground. Thereby, a plurality of cutting edges are simultaneously ground in one step. This makes it possible to reduce machining costs for each cutting edge of the hard sintered body, and makes it possible to provide a tool at low manufacturing cost for the single cutting edge.

In order to manufacture a less expensive hard sintered body indexable insert such as the tools shown in Figures 3 and 4, there is a need to further integrate the composite hard sintered body with respect to the single tool substrate 55. Specifically, there is a need to dispose the composite hard sintered body not only at the corner part of the upper surface of the hard sintered body indexable insert 51 but also at the nose part of the lower surface of the hard sintered body indexable insert 51.

However, a brazing alloy of a soft metal chiefly composed of Ag and Cu has been conventionally used to bond such a composite hard sintered body. Brazing is carried out by heating it to a temperature such that the liquid phase of the brazing alloy appears in the atmosphere while using a high-frequency heating machine or the like. It was difficult to bond multiple composite hard sintered bodies in terms of positioning for the following reasons.

For example, a composite hard sintered body is brazed to the corner part of the upper surface of the hard sintered body indexable insert by use of a conventional brazing alloy, and thereafter it is turned upside down. While heating is being carried out by the high-frequency heating machine so as to braze the composite hard sintered body to the corner part of the upper surface, a brazing alloy of the lower surface of the composite hard sintered body, which has been brazed, is also heated and softened. Therefore, in the composite hard sintered body of the lower surface, which has been brazed, there is a case in which the position thereof deviates as a result of gravity, or in which the composite hard sintered body itself falls from the tool substrate. Therefore, it was substantially impossible to complete the tool.

In contrast, in order to remove a bond interface between the hard sintered body and the cemented carbide support, the idea of bonding the hard sintered body onto the tool substrate without the cemented carbide support has been proposed. This tool structure is disclosed in Japanese Published Unexamined Patent Application Tokukaihei 11-320218.

It is a hard sintered body indexable insert in which a hard sintered body of diamond or of cubic boron nitride is brazed directly to a tool substrate in a vacuum or in an inert gas atmosphere by use of a brazing alloy that constitutes a bonding layer comprising Ti and/or Zr and Cu.

In a technique disclosed in Japanese Published Unexamined Patent Application Tokukaihei 11-320218, Cu is included as a component of the bonding layer. Cu is higher than Ag in elastic modulus, and is preferable also in a cutting tool used under a heavy load. It additionally discloses a technique in which the hard sintered body is brazed directly to the tool substrate.

In consideration of the aforementioned conventional techniques, the present invention provides a hard sintered body indexable insert that contains cubic boron nitride, that can be inexpensively manufactured without compromising the performance of a tool, and that is highly completed in a technical aspect and in a manufacturing aspect, and the present invention provides a manufacturing method thereof.

### Disclosure of Invention

A hard sintered body indexable insert according to an aspect of the present invention is characterized in that a hard sintered body that contains cubic boron nitride by 20 vol % or more is brazed to a seating groove formed at a corner of a tool substrate, and a ridge of the hard sintered body is used as a cutting edge.

At least a pair of hard sintered bodies or composite hard sintered bodies are disposed on the upper and lower surfaces in the thickness direction of the hard sintered body indexable insert. The thickness of a tool substrate part between a pair of seating grooves is within the range of 30% to 90% with respect to the thickness of the hard sintered body indexable insert, and the length of the cutting edge of the hard sintered body or of the composite hard sintered body is within the range of 0.5 mm to 4.0 mm.

Said bonding layer of the brazing alloy is characterized by containing Ti and/or Zr by 0.5 to 65 wt % and further containing Cu.

A manufacturing method for manufacturing this hard sintered body indexable insert is described as follows. A brazing alloy with which a hard sintered body or a composite hard sintered body that contains cubic boron nitride by 20 vol % or more is brazed to a seating groove formed at a corner of the tool substrate is made paste-like by mixing a powdery brazing alloy that contains Ti and/or Zr by 0.5 to 65 wt % and further contains Cu with an organic binder.

Thereafter, the hard sintered body or the composite hard sintered body is bonded to the seating groove of the upper surface of the tool substrate through the paste-like brazing alloy, a solvent component in the organic binder is then evaporated, and the hard sintered body or the composite hard sintered body is temporarily fastened. Thereafter, the hard sintered body or the composite hard sintered body is bonded to the seating groove of the lower surface of the tool substrate through the paste-like brazing alloy, the organic binder is then evaporated, and the hard sintered body or the composite hard sintered body is temporarily fastened. Thereafter, the hard sintered body indexable insert in which the hard sintered body or the composite hard sintered body is temporarily fastened to the upper and lower surfaces is heated, brazed, and firmly bonded in a vacuum or in an inert gas atmosphere.

### Brief Description of Drawings

Figure 1 shows a front view and a sectional view of a hard sintered body indexable insert according to an embodiment of the present invention.
Figure 2 shows a front view and a sectional view of a hard sintered body indexable insert according to another embodiment of the present invention.
Figure 3 shows a front view and a sectional view of a conventional sintered body indexable insert.
Figure 4 shows a front view and a sectional view of another conventional sintered body indexable insert.
Figure 5 shows a front view and a sectional view of still another conventional sintered body indexable insert.
Figure 6 shows a front view and a sectional view of still another conventional sintered body indexable insert.

### Best Mode for Carrying Out the Invention

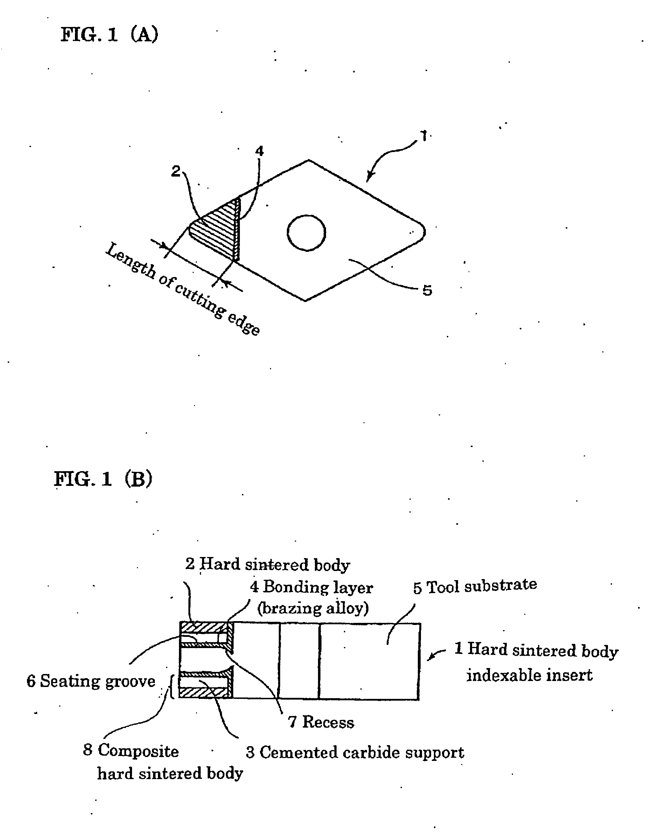

The present inventors have earnestly sought a method for inexpensively manufacturing a hard sintered body indexable insert that contains cubic boron nitride without compromising the performance of a tool. As a result, a hard sintered body indexable insert was manufactured in which a hard sintered body that contains cubic boron nitride by 20 vol % or more is bonded to a seating groove formed at a corner of a tool substrate, and a ridge of the hard sintered body is used as a cutting edge. In Figure 1, at least one pair of composite hard sintered bodies that each consist of a hard sintered body 2 and a cemented carbide support 3 are disposed on the upper and lower surfaces in a thickness direction of a hard sintered body indexable insert 1. The thickness of a tool substrate 5 between a pair of seating grooves is within the range of 30% to 90% with respect to the thickness of the hard sintered body indexable insert 1, and the length of the cutting edge of the hard sintered body 2 is within the range of 0.5 mm to 4.0 mm. Said bonding layer 4 of the brazing alloy contains Ti and/or Zr by 0.5 to 65 wt % and further contains Cu.

Herein, the tool substrate 5 with high strength exists between the hard sintered bodies 2 brazed to seating grooves 6 of the upper and lower surfaces, respectively, of the hard sintered body indexable insert 1 of the present invention. Therefore, despite the occurrence of cracks and breakage in the cutting edge of a hard sintered body 2 under severe cutting conditions, the cracks and breakage will not run to an unused corner opposite to the corner that has been used.

Additionally, since there is a vertical brazed plane to main cutting force among brazing planes, the hard sintered body 2 does not fall off by a shearing force. The tool substrate 5 may be made of any material so long as it is higher in strength than the hard sintered body 2. However, cemented carbide that has a small difference in thermal expansion with the hard sintered body 2 is preferable in order to prevent cracks and breakage of the hard sintered body 2 caused by heating when brazed.

If the thickness of the tool substrate 5 sandwiched between the pair of seating grooves 6 reaches less than 30% with respect to the thickness of the hard sintered body indexable insert 1, there is an increased possibility that the cutting resistance that occurs while cutting will concentrate on the corner of the seating groove 6 so as to cause breakage from the corner of the seating groove 6 while cutting. On the other hand, if it exceeds 90%, the thickness of the part of the hard sintered body 2 will thin, causing the flank wear of the cutting edge to easily exceed the layer of the hard sintered body 2. In this case, the flank wear progresses rapidly, and increases possibility of a reduced tool life.

Therefore, the thickness of the tool substrate 5 sandwiched between the pair of seating grooves 6 is desirably within the range of 30% to 90% with respect to the thickness of the hard sintered body indexable insert 1.

More desirably, it is within the range of 30% to 60%, in consideration of the composite hard sintered body with which the cemented carbide support 3 is backed.

The thickness of each hard sintered body 2 is desirably 0.8 mm to 1.6 mm. If the thickness is less than 0.8 mm, a brazing area in the thickness direction decreases. If the hard sintered body 2 whose thickness exceeds 1.6 mm is brazed to the upper and lower surfaces, the thickness of the tool substrate 5 thins, and the possibility of breakage to occur from the corner of the seating groove 6 will increase when cutting under severe conditions.

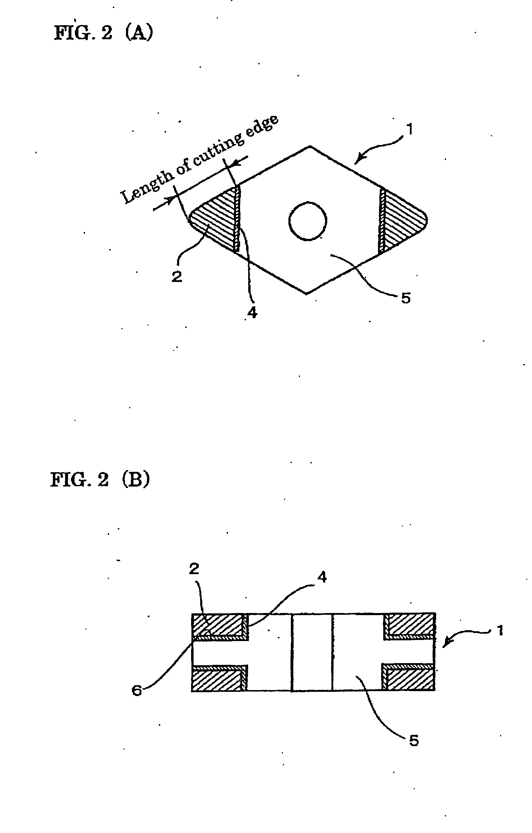

Thus, in order to secure the thickness of the hard sintered body 2 without thinning the part of the tool substrate 5, the structure of Figure 2 in which the hard sintered body 2 is bonded directly to the tool substrate 5 through the bonding layer 4 is preferable to the conventional composite hard sintered body backed with the cemented carbide support 3.

If the cutting-edge length of the hard sintered body exceeds 4.0 mm, the length from the bottom corner of the seating groove 6 to the cutting edge is increased, and an arm length of moment become long. Accordingly, large stress caused by the cutting resistance concentrates on the corner of the seating groove 6, thus enhancing the possibility that breakage will occur from this seating groove corner while cutting. If the cutting-edge length is less than 0.5 mm, there will be frequent occurrences of which a cutting-edge length necessary for cutting cannot be obtained. Therefore, desirably, the cutting-edge length of the hard sintered body 2 is within the range of 0.5 mm to 4.0 mm.

On the other hand, since the pair of hard sintered bodies 2 are disposed on the upper and lower surfaces of the hard sintered body indexable insert 1, the execution of one process for forming the cutting edge at the corner part of the hard sintered body 2 (i.e., process for grinding two sides between which the corner part is sandwiched and grinding one part) makes it possible to form the two upper and lower cutting edges, and makes it possible to greatly reduce tool-machining costs for one cutting edge of the hard sintered body 2.

Further, for the same reason as above, since the number of pairs of upper and lower hard sintered bodies 2 is increased by disposing them at the other corner parts, machining costs for one cutting edge of the hard sintered body 2 or the cost of the tool substrate 5 falls. This increasingly reduces the manufacturing costs for one cutting edge of the hard sintered body 2. Therefore, it is more desirable to dispose of the pair of upper and lower hard sintered bodies 2 at all corner parts, which can be used for cutting-edges.

On the other hand, the present inventors have found that the hard sintered body 2 or the composite hard sintered body can be brazed to the upper and lower surfaces of the tool substrate 5 according to the following method.

In the present invention, a brazing alloy that contains Ti or Zr is used. This brazing alloy conventionally has been used for Ti bonding or ceramic bonding, and rarely has been used for tools as in the present invention. Ti or Zr has a high melting point, and therefore brazing temperature becomes high. Additionally, Ti or Zr is an easily oxidized metal, and therefore brazing cannot be carried out in the atmosphere. The brazing must be carried out at least in an inert gas or in a vacuum. Therefore, since the positioning of a hard sintered body or a composite hard sintered body cannot be operated directly, it has been considered that practical application cannot be accomplished from the viewpoint of cost.

However, as a result of studies, the present inventors have found that, if a brazing alloy of the present invention is used, brazing can be carried out merely by inserting the material into an airtight container and by appropriately controlling the temperature, with high positioning accuracy and without allowing a lower hard sintered body to fall off. Concerning the composition of the brazing alloy after being brazed, easily evaporable components tend to evaporate and decrease because the brazing temperature is high.

A more explanatory description provides that, a paste-like brazing alloy is prepared by mixing a powdery brazing alloy that contains 0.5 to 65 wt % Ti and/or Zr and that further contains Cu with an organic binder. Thereafter, a hard sintered body 2 or a composite hard sintered body is bonded to a part of a seating groove 6 formed in the upper surface of a tool substrate 5 through the paste-like brazing alloy. Herein, any material can be used as the organic binder provides that it has moderate viscosity, such as that of glue, of gelatin, or of terpineol, and provided that a solvent component of the binder evaporates at a relatively low temperature. The "low temperature" mentioned here means temperature less than a solidus line or less than a liquidus line of the brazing alloy component, and indicates the temperature according to which such oxidation as changing the quality of the brazing alloy does not occur.

Thereafter, the indexable insert in which the hard sintered body 2 or the composite hard sintered body 8 is bonded through the paste-like brazing alloy is heated or is left in the atmosphere at less than the temperature at which a liquid phase appears from the brazing alloy and in the temperature range in which the quality of the brazing alloy does not change and is not oxidized. The solvent component of the organic binder is evaporated from the paste-like brazing alloy in this manner. Thus, the hard sintered body 2 or the composite hard sintered body 8 can be temporarily fastened to the tool substrate 5 by the function of the binder without changing the quality of the brazing alloy. According to the same procedure, the hard sintered body 2 or the composite hard sintered body is temporarily fastened to the seating groove 6 of the lower surface of the tool substrate 5.

The hard sintered body indexable insert 1, which is obtained in this way and in which at least the pair of hard sintered bodies 2 or composite hard sintered bodies are temporarily fastened, is brazed by heating in a vacuum or in an inert gas atmosphere. At this time, since the brazing alloy of the present invention contains Ti and/or Zr, both of which are active metals, and it has good wettability to the hard sintered body as opposed to the conventional brazing alloy which does not have good wettability. The cemented carbide used as the tool substrate 5 has good wettability to the conventional brazing alloy, and has good wettability to the brazing alloy of the present invention.

Therefore, even though the eutectic liquid phase component of the brazing alloy appears by heating, the hard sintered body 2 or the composite hard sintered body comes to be easily drawn to the seating groove 6 of the tool substrate 5 since the surface tension of this liquid phase component is high. Therefore, after the heating is completed, situations do not occur in which the position of the hard sintered body 2 or of the composite hard sintered body deviates, or the hard sintered body 2 or the composite hard sintered body itself falls from the tool substrate 5 as a result of gravity.

Desirably, the composition of the brazing alloy is within the aforementioned range not only from the viewpoint of the positioning in the brazing process but also from the viewpoint of cutting performance, because the brazing alloy whose composition is within the aforementioned range has excellent bonding strength with respect to the hard sintered body 2 or the composite hard sintered body.

In particular, a brazing alloy, a part of which contains 20 wt % to 30 wt % Ti and 20 wt % to 30 wt % Zr and the remainder of Cu and inevitable impurities, is high in hardness, and is suitable for the brazing of the hard sintered body. A brazing alloy, a part of which contains 0.5 wt % to 20 wt % Ti and/or Zr and 10 wt % to 40 wt % Cu and the remainder of Ag and inevitable impurities, is suitable for the composite hard sintered body. Alternatively, a brazing alloy, a part of which contains 0.5 wt % to 10 wt % Ti and/or Zr, 5 wt % to 20 wt % In, and 15 wt % to 35 wt % Cu, and the remainder of Ag and inevitable impurities, is desirable.

Any of the brazing alloys within these ranges are preferable because of their remarkable effect of decreasing the melting point by a three-component eutectic or by a four-component eutectic, and they can undergo brazing processing at a relatively low temperature of 700 to 900°C so as to reduce heat damage to the hard sintered body 2.

Further, a coating layer is formed on the surface of the thus produced hard sintered body indexable insert 1 according to a physical vapor deposition method or a chemical vapor deposition method. That is, there is formed a coating layer comprising at least one element selected from the group consisting of elements belonging to groups IVa, Va, VIa in the periodic table and elements Al, Si, and B, or at least one compound selected from the group consisting of nitride, carbide, or oxide of at least one metal selected from this group, and their solid solutions. In this case, the coating layer is preferable because the cutting performance of the tool is improved by the coating, and coating costs for one cutting edge of the hard sintered body can be greatly reduced without compromising tool performance.

As shown in Figure 1, a recess 7 is provided at the brazing part of the composite hard sintered body of the tool substrate 5. This is effective in the fact that the composite hard sintered body and the tool substrate can be brazed with excellent dimensional accuracy. The same applies to the hard sintered body shown in Figure 2.

Additionally, in the present invention, it is effective to mark a numeral on each corner of the edge. The conventional indexable insert using the hard sintered body merely uses one or two corners. In contrast, the indexable insert of the present invention is effective because the blade exists on the upper and lower surfaces, and a judgment regarding whether it has been used or not can be easily made by the numeral.

### (Embodiment 1)

The hard sintered body indexable insert 1 shown in Figure 2 was made. It was made for a purpose to examine an its effect on cutting performance and on durability by the thickness of the part of the tool substrate 5 between a pair of seating grooves 6. The pair of upper and lower seating grooves 6 used to bond the hard sintered body 2 was provided at each corner of the tool substrate corner, and the depth of the seating groove 6 was variously changed. These are shown in Table I .

The entire thickness of the hard sintered body indexable insert 1 was 4.76 mm in each sample, and the length of the cutting-edge was 2.4 mm in each sample.

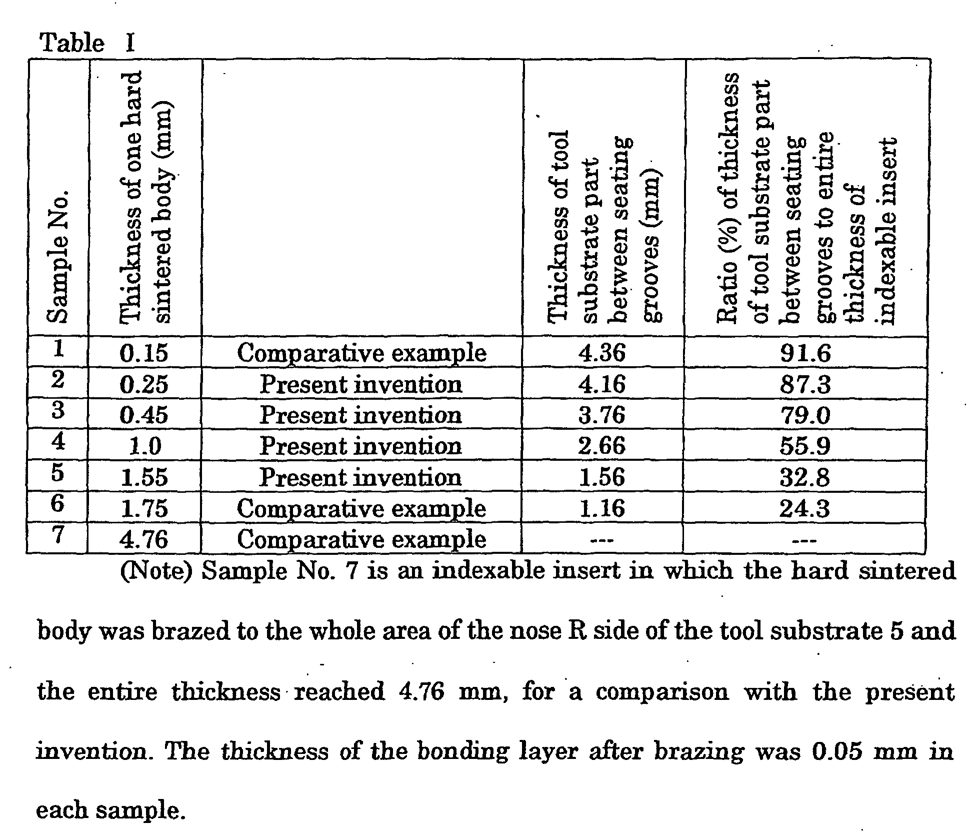

Referring to the manufacturing method, a paste-like brazing alloy was first prepared by mixing a powdery brazing alloy which contains 25 wt % Ti and 25 wt % Zr and the remainder of Cu and inevitable impurities with terpineol.

Thereafter, the hard sintered body 2 that contains cubic boron nitride by 50 vol % was bonded through the paste-like brazing alloy to a part of the seating groove 6 of the upper surface of the tool substrate 5 in which the depth of the seating groove 6 has been variously changed. Thereafter, in order to temporarily fasten the hard sintered body 2 onto the tool substrate 5 by evaporating a solvent component of a binder, the hard sintered body indexable insert 1 was dried in an atmospheric atmosphere furnace of 100°C.

After drying was completed, the seating groove was turned upside down so that the lower surface was directed upward, and the hard sintered body 2 was temporarily fastened to the turned seating groove according to the same procedures.

Thereafter, this hard sintered body indexable insert 1 was subjected to brazing in a vacuum atmosphere of 1.333×10⁻²Pa and at a temperature of 850°C. Thereafter, in order to form a cutting edge at a ridge of the hard sintered body 2, the ridge was ground, thereafter a coating layer of TiAlN whose thickness is 2.0µm was formed on the surface of the hard sintered body indexable insert 1 according to the PVD method, and the cutting performance thereof was evaluated.

Table II shows the results.

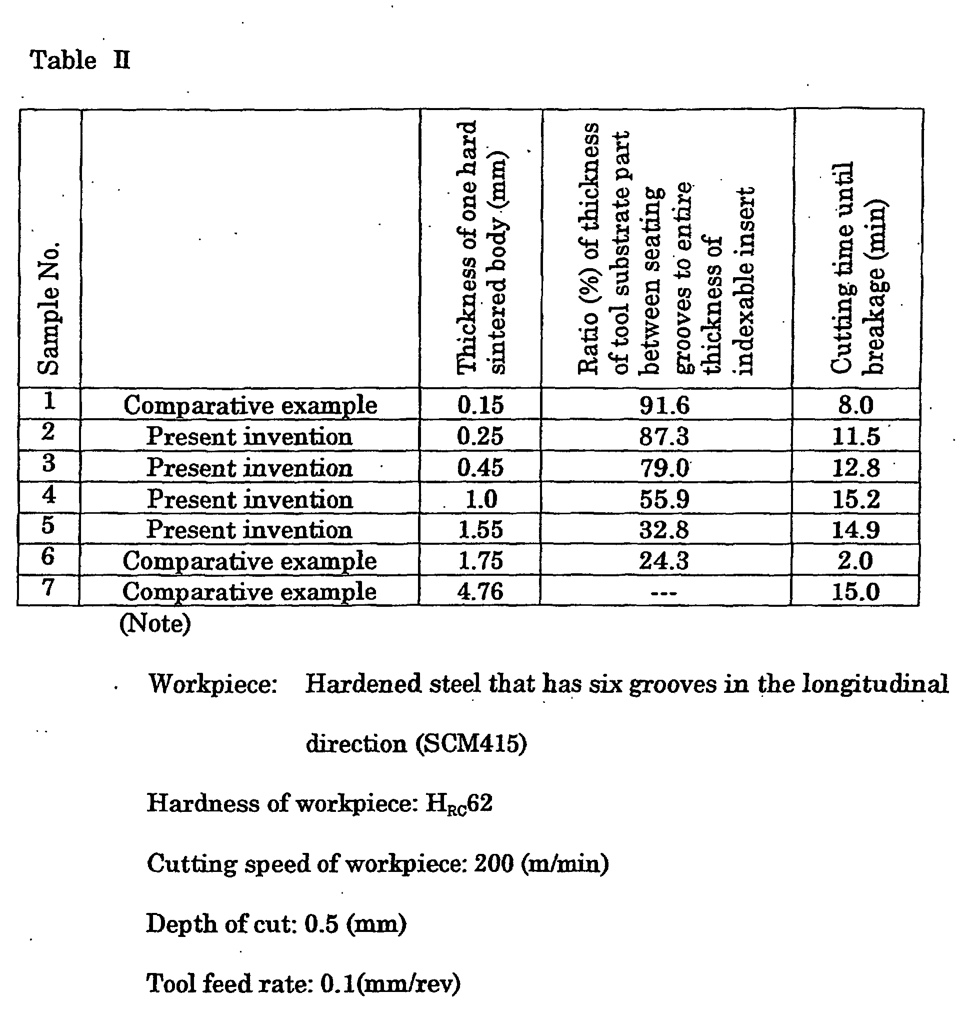

As a result, the amount of flank wear exceeded the thickness of the hard sintered body 2 while cutting using the tool of sample No. 1 in which the hard sintered body 2 is thin, therefore wear rapidly progressed, cutting resistance increased, and breakage occurred in the cutting edge in a short time. In the tool of sample No. 6 in which the thickness of the tool substrate 5 is thin, stress during the cutting concentrated on the corner of the seating groove, and breakage occurred from the corner at the beginning of the cutting without resisting the stress.

In sample No. 7 in which the hard sintered body 2 is brazed to the overall side face of the tool substrate 5, cracks in the upper surface of the tool that occurred by the cutting evaluation ran through the hard sintered body 2 brazed to the entire side face, and reached the lower surface of the tool. As a result, the corner of the lower surface of the tool, which was an unused side, was no longer available.

In contrast, in the tools of sample Nos. 2 through 5 of the present invention, neither breakage of the tool substrate during cutting, nor rapid flank wear, nor immediate breakage of the cutting edge occurred in the cutting test, and cutting could be carried out during its long life. Additionally, after the use of the upper cutting edge of the hard sintered body, the performance of the tool was not impaired, preventing breakage of the cutting edge to run to the lower surface.

### (Embodiment 2)

The hard sintered body indexable insert 1 shown in Table III was made to examine an influence exerted on cutting performance and on durability by the length of the cutting edge of the hard sintered body 2. That is, in the hard sintered body indexable insert 1 shown in Table III, a pair of upper and lower sintered bodies 2 was bonded at each corner of the tool substrate, and the cutting-edge length of the hard sintered body 2 was variously changed.

The entire thickness of the hard sintered body indexable insert 1 was 4.76 mm in each sample, and the thickness of the tool substrate between the seating grooves was 2.66 mm in each sample.

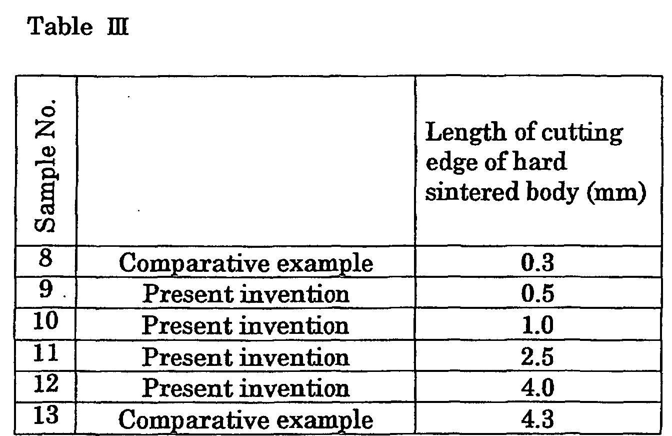

A paste-like brazing alloy was first prepared by mixing a powdery brazing alloy which contains 2 wt % Ti and 26 wt % Cu and the remainder of Ag and inevitable impurities with gelatin.

Thereafter, the hard sintered body 2 that contains cubic boron nitride by 65 vol %, in which the length of the cutting edge has been variously changed, was bonded through the paste-like brazing alloy to a part of the seating groove 6 of the upper surface of the tool substrate 5. Thereafter, in order to temporarily fasten the hard sintered body 2 onto the tool substrate 5 by evaporating a solvent component of a binder, the hard sintered body indexable insert 1 was dried in an atmospheric atmosphere furnace of 80°C.

After drying was completed, the seating groove was turned upside down so that the lower surface thereof was directed upward, and the hard sintered body 2 was temporarily fastened to the turned seating groove according to the same procedures.

Thereafter, the hard sintered body indexable insert 1 was brazed in an argon atmosphere and at a temperature of 830°C such that parts to be brazed do not come in contact with other materials. Thereafter, in order to form a cutting edge at a ridge of the hard sintered body 2, the ridge was ground, and the cutting performance thereof was evaluated.

Table IV shows the results.

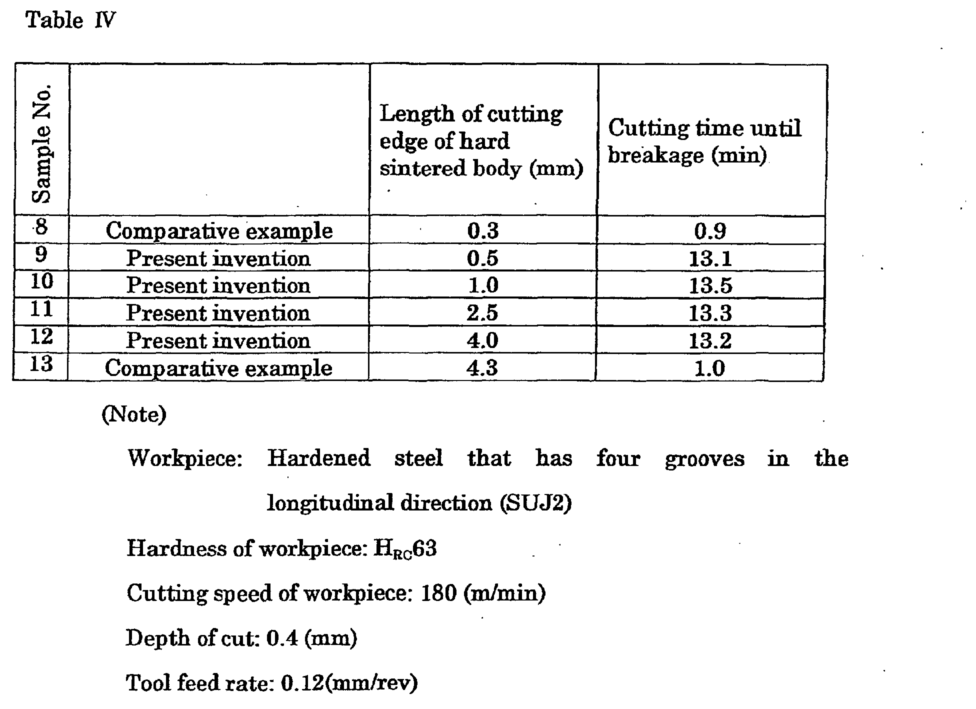

As a result, in the tool of sample No. 8 in which the cutting edge of the hard sintered body 2 is short, chipping occurred in the vicinity of the boundary between the hard sintered body 2 and the tool substrate 5 while cutting because the cutting edge of the hard sintered body 2 was short. This caused breakage at the beginning of the cutting, and made it impossible to continue the cutting operation.

In the tool of sample No. 13 in which the cutting edge is long, the length of the part of the tool substrate 5 between the upper and lower seating grooves 6 is long, and therefore there is considerable stress at the bottom corner of the seating groove 6 while cutting. Breakage occurred from this corner at the beginning of the cutting operation without resisting the stress.

In contrast, in the tools of sample Nos. 9 through 12 of the present invention, cutting could be carried out during its long life while preventing breakage to occur at the beginning of the cutting.

### (Embodiment 3)

The hard sintered body indexable insert having the structure shown in Figure 1 that had been obtained from the composite hard sintered body was made. The entire thickness of the hard sintered body indexable insert was 4.76 mm, and the thickness of the tool substrate between the seating grooves was 2.66 mm. The composite hard sintered body used in this example contained cubic boron nitride by 50 vol %, and the thickness of the hard sintered body and that of the cemented carbide support were each 1 mm.

A paste-like brazing alloy was prepared by mixing a powdery brazing alloy which contains 2 wt % Ti and 26 wt % Cu and the remainder of Ag and inevitable impurities with gelatin. Thereafter, the composite hard sintered body having a cutting-edge length of 3 mm was bonded through the paste-like brazing alloy to a part of the seating groove of the upper surface of the tool substrate. Thereafter, in order to temporarily fasten the composite hard sintered body onto the tool substrate by evaporating a solvent component of a binder, the hard sintered body indexable insert was dried in an atmospheric atmosphere of 80°C. After drying was completed, the seating groove was turned upside down so that the lower surface thereof was directed upward, and the composite hard sintered body was temporarily fastened to the turned seating groove according to the same procedures.

Thereafter, the hard sintered body indexable insert was brazed in an argon atmosphere and at a temperature of 830°C. Thereafter, in order to form a cutting edge at a ridge of the composite hard sintered body, the ridge was ground, and the cutting performance thereof was evaluated.

As a result of the cutting test that was made in the same way as in Embodiment 2, the hard sintered body indexable insert of the present invention could perform cutting operation during its long life.

### Industrial Applicability

A hard sintered body indexable insert has been invented which is capable of brazing a hard sintered body that contains cubic boron nitride by 20 vol % or more to all corners of a tool substrate and to the upper and lower surfaces thereof. A manufacturing method for manufacturing the hard sintered body indexable insert also has been invented.

The present invention is characterized in that a brazing alloy a part of which contains Ti and/or Zr and the remainder of which consists of Cu and inevitable impurities is used as a typical brazing alloy, and the hard sintered body is brazed to the tool substrate by heating it in a vacuum or in an inert gas atmosphere, as opposed to high-frequency heating at a high temperature. The present invention is further characterized in that, as optimum conditions, the thickness of the tool substrate between the upper and lower seating grooves is set to be 30% to 90% of the entire thickness of the hard sintered body indexable insert, and the cutting-edge length of the hard sintered body is set to be 0.5 mm to 4.0 mm.

According to the present invention, machining costs for one cutting edge of the hard sintered body can be reduced, and the tool substrate can be effectively used. In other words, a hard sintered body indexable insert can be provided which is excellent in performance and in durability and which leads to cost-efficiency.

## Claims

1. A hard sintered body indexable insert in which a hard sintered body that contains cubic boron nitride by 20 vol % or more is brazed to a seating groove formed at a corner of a tool substrate, and a ridge of the hard sintered body is used as a cutting edge, the hard sintered body indexable insert **characterized in that** at least a pair of hard sintered bodies or composite hard sintered bodies are disposed on upper and lower surfaces in a thickness direction of the hard sintered body indexable insert; a thickness of a part of the tool substrate between the pair of seating grooves is within a range of 30% to 90% with respect to a thickness of the hard sintered body indexable insert; a length of a cutting edge of the hard sintered body or of the composite hard sintered body is within a range of 0.5 mm to 4.0 mm; and a bonding layer that has been brazed contains 0.5 to 65 wt % Ti and/or Zr and further contains Cu.

2. The hard sintered body indexable insert as recited in Claim 1, wherein the hard sintered body or the composite hard sintered body is 0.8 mm to 1.6 mm in thickness per piece.

3. The hard sintered body indexable insert as recited in Claim 1 or Claim 2, wherein the hard sintered body is bonded directly to the tool substrate through the bonding layer.

4. The hard sintered body indexable insert as recited in any one of Claim 1 through Claim 3, wherein the bonding layer contains 20 wt % to 30 wt % Ti and 20 wt % to 30 wt % Zr, and the remainder of Cu and inevitable impurities.

5. The hard sintered body indexable insert as recited in any one of Claim 1 through Claim 3, wherein the bonding layer contains 0.5 wt % to 20 wt % Ti and/or Zr and contains 10 wt % to 40 wt % Cu and the remainder of Ag and inevitable impurities.

6. The hard sintered body indexable insert as recited in any one of Claim 1 through Claim 3, wherein the bonding layer contains 0.5 wt % to 10 wt % Ti and/or Zr, and contains 5 wt % to 20 wt % In and 15 wt % to 35 wt % Cu, and the remainder of Ag and inevitable impurities.

7. The hard sintered body indexable insert as recited in any one of Claim 1 through Claim 6, wherein on a surface of the hard sintered body indexable insert, there is formed a coating layer comprising at least one element selected from the group consisting of elements belonging to groups IVa, Va, VIa in the periodic table and elements Al, Si, and B, or at least one compound selected from the group consisting of nitride, carbide, or of oxide at least one metal selected from this group, and their solid solutions.

8. A manufacturing method for manufacturing a hard sintered body indexable insert in which a hard sintered body that contains cubic boron nitride by 20 vol % or more is brazed to a seating groove formed at a corner of a tool substrate, and a ridge of the hard sintered body is used as a cutting edge, the manufacturing method comprising:
a step of preparing a paste-like brazing alloy by mixing a powdery brazing alloy that contains 0.5 to 65 wt % Ti and/or Zr and that further contains Cu with an organic binder;
a step of bonding the hard sintered body or the composite hard sintered body to a seating groove of the upper surface of the tool substrate through the paste-like brazing alloy and thereafter temporarily fastening the hard sintered body or the composite hard sintered body by evaporating a solvent component of the organic binder;
a step of bonding the hard sintered body or the composite hard sintered body to a seating groove of the lower surface of the tool substrate through the paste-like brazing alloy and thereafter temporarily fastening the hard sintered body or the composite hard sintered body by evaporating the organic binder; and
a step of brazing and fixing the hard sintered body indexable insert in which the hard sintered body or the composite hard sintered body is bonded to tool substrate in a vacuum or in an inert gas atmosphere.

9. The manufacturing method as recited in Claim 8, wherein the brazing alloy contains 20 wt % to 30 wt % Ti and 20 wt % to 30 wt % Zr, and the remainder of Cu and inevitable impurities.

10. The manufacturing method as recited in Claim 8, wherein the brazing alloy contains 0.5 wt % to 20 wt % Ti and/or Zr, 10 wt % to 40 wt % Cu, and the remainder of Ag and inevitable impurities.

11. The manufacturing method as recited in Claim 8, wherein the brazing alloy contains 0.5 wt % to 10 wt % Ti and/or Zr, 5 wt % to 20 wt % In, 15 wt % to 35 wt % Cu, and the remainder of Ag and inevitable impurities.

12. The manufacturing method as recited in any one of Claim 8 through Claim 11, further comprising a step of forming, on a surface of the hard sintered body indexable insert, a coating layer comprising at least one element selected from the group consisting of elements belonging to groups IVa, Va, VIa in the periodic table and elements Al, Si, and B, or at least one compound selected from the group of nitride, carbide, or oxide of at least one metal selected from this group, and their solid solutions, according to a physical vapor deposition method or according to a chemical vapor deposition method.
